# FASCICULE DE BREVET EUROPEEN

(11) **EP 1 207 805 B1**
(45) Date de publication et mention de la délivrance du brevet: **23.03.2005**
(21) Numéro de dépôt: 00946046.0
(22) Date de dépôt: 30.06.2000
(51) Int. Cl.: A61C 17/02

(54) **HYDROPULSEUR DENTAIRE SPECIFIQUE BRANCHABLE AU BEC DU ROBINET D'EAU COURANTE**
AN EINEN WASSERLEITUNGSHAHN ANSCHLIESSBARE ZAHNSPÜLEINRICHTUNG
SPECIFIC DENTAL WATER PULSE CAPABLE OF BEING CONNECTED TO A RUNNING WATER FAUCET SPOUT

(30) Priorité: 30.06.1999 FR 9908355
(43) Date de publication de la demande: 29.05.2002
(73) Titulaire: Chetrit, Michael, 94120 Fontenay sous Bois (FR); Cohen, Emmanuel, 75001 Paris (FR); Chetrit, Yann, 94120 Fontenay sous Bois (FR)
(72) Inventeur: Chetrit, Michael, 94120 Fontenay sous Bois (FR); Cohen, Emmanuel, 75001 Paris (FR); Chetrit, Yann, 94120 Fontenay sous Bois (FR)
(86) Numéro de dépôt international: PCT/FR2000/001869
(87) Numéro de publication internationale: WO 2001/001882

(56) Documents cités:
- US-A- 4 138 064
- US-A- 5 385 533

## Description

L'invention est un hydropulseur destiné à nettoyer les espaces inter-dentaires qui présente des perfectionnements spécifiques pour permettre son utilisation domestique pratique sur le réseau d'eau courante après branchement rapide au bec d'un robinet.

L'intérêt principal d'un hydropulseur est de nettoyer les espaces inter-dentaires difficilement accessibles par les brosses à dents et où se déposent des débris alimentaires cariogènes.

Le marché propose des hydropulseurs électriques. Or ils sont susceptibles d'être la cause de chocs électriques. Ils sont également bruyants, encombrants, ont un volume de réservoir limité, nécessitent des opérations préparatoires (branchement électrique loin du lavabo, remplissage du réservoir, entretien mécanique).

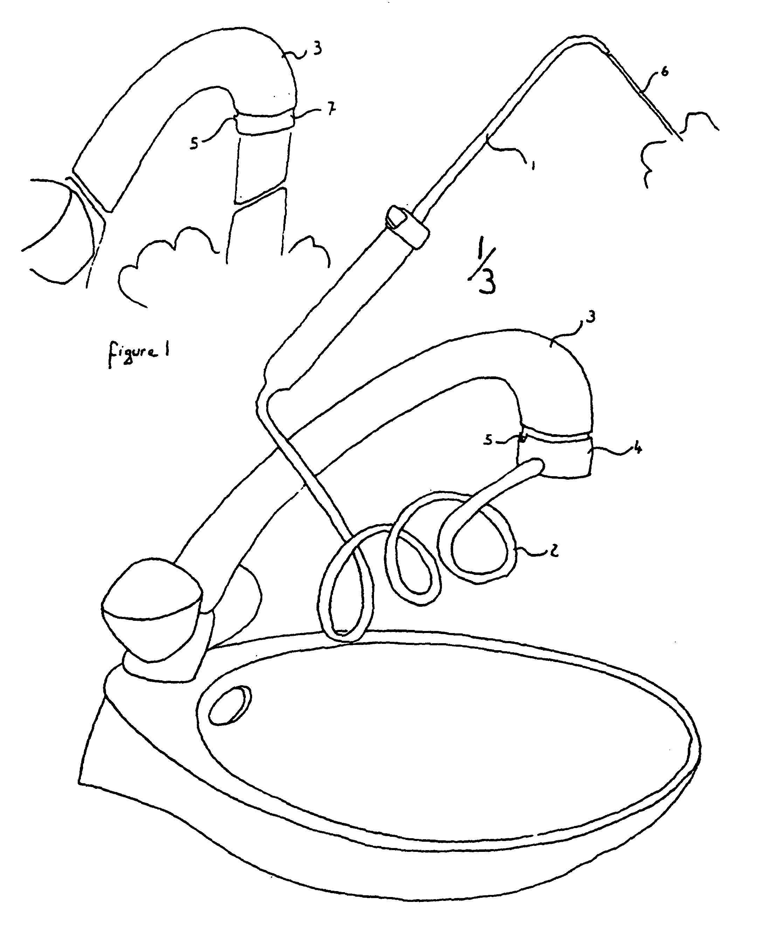

Un hydropulseur branché sur l'alimentation en eau courante est un ensemble formé par un raccord branché au bec du robinet (3) qui dévie l'eau courante vers une buse (1) à la sortie de laquelle un jet d'eau sous pression (6) permet de nettoyer les espaces inter-dentaires (figure 1).

L'idée n'est pas nouvelle d'imaginer un hydropulseur branché sur l'alimentation en eau courante.

Cependant, les mécanismes mis au point jusqu'ici n'étaient pas conçus pour pouvoir être utilisés de façon pratique, efficace et rapide dans l'environnement domestique d'une salle de bain.

L'objectif est donc de mettre au point un hydropulseur utilisant un raccord rapide, branchable et débranchable rapidement et aisément du bec du robinet d'eau courante. De plus, on cherche à maintenir la fonction d'aérateur qui permet, quand l'hydropulseur dentaire n'est pas branché, d'utiliser normalement le robinet. L'aérateur permet en effet un flux homogène en eau, des économies en eau, réduit les éclaboussures et arrête bien nettement le flux d'eau dès la fermeture du robinet.

On dira que le raccord amont de l'hydropulseur (7) est la partie du raccord solidaire du bec du robinet d'eau courante (3) et que le raccord aval de l'hydropulseur (4) est la partie du raccord solidaire du tube (2), lui-même reliée à la buse (1) de l'hydropulseur. Le raccord aval (4) se branche au raccord amont (7) pour recueillir l'eau à la sortie du robinet d'eau courante (3) et orienter cette eau vers la sortie de la buse (1).

Une première idée consiste à réaliser la combinaison d'un aérateur d'eau (7) vissé au bec du robinet d'eau courante et d'un hydropulseur dentaire (figure 1). La coque de l'aérateur d'eau vissée au bec du robinet d'eau courante intègre ainsi, sur sa surface externe, un système de branchement qui constitue le raccord amont de l'hydropulseur dentaire (7). Le module d'aération d'eau (8) est logé dans le raccord amont de l'hydropulseur (7). On se sert donc du taraudage ou du filetage généralement pratiqué au bec du robinet d'eau courante (3) et destiné à recevoir un aérateur pour y visser, grâce au filetage ou au taraudage correspondant (13) sur la coque de l'aérateur, un raccord amont d'hydropulseur (7) qui permet le logement d'un module d'aération (8). Quand l'hydropulseur dentaire n'est pas branché, la fonction normale du robinet est conservée avec aération. Cette combinaison entre aérateur et hydropulseur fonctionnant sur le réseau d'eau courante opère ainsi un gain de place et une fonctionnalité importants pour l'utilisation pratique et efficace d'un hydropulseur dentaire branché au bec d'un robinet d'eau courante dans l'environnement d'une salle de bain. Un ou plusieurs joints (9) assurent l'étanchéité entre l'aérateur et le bec du robinet d'eau courante.

Il est de plus très important que le raccord amont (7) de l'hydropulseur vissé à demeure sur le robinet (3) soit très discret. Son apparence doit donc être la plus proche possible d'un aérateur standard de salle de bain.

Une technique efficace et économique consiste dans l'utilisation des systèmes de branchement à ergots et à encoches, tels les systèmes dits "à baïonnette" ou «à pince » par exemple. Un système à encoches et à ergots « à pinces » est, par exemple, une pince solidaire du raccord aval de l'hydropulseur et sur laquelle se trouve un ou plusieurs encoches (ou ergots) qui viennent se loger, lors du pincement, dans un ou plusieurs ergots (ou encoches) situés sur la coque de l'aérateur.

Le système de branchement du raccord aval de l'hydropulseur (4) à la coque de l'aérateur (7) s'intègre sur la partie externe de la coque de l'aérateur pour éviter de recourir au système de l'aérateur mobile ou glissant dit « sliding aérateur » (brevet US 5385533 A), système où le module d'aération doit être poussé dans la coque de l'aérateur à l'occasion de chaque branchement ce qui nécessite une hauteur et un diamètre supérieurs de la coque de l'aérateur, des encoches internes, creusées dans l'épaisseur de la coque de l'aérateur, étant de surcroît susceptibles d'être très facilement entartrées entravant le branchement.

Dans le brevet US sus-mentionné, l'aérateur est glissant et peut donc parfaitement se coincer en position haute notamment en se tournant légèrement dans son logement. L'aérateur ne peut alors plus remplir sont rôle normal d'aérateur et est susceptible de gêner fortement le passage normal de l'eau quand l'hydropulseur est débranché.

Ces inconvénients du brevet US susmentionné déposé depuis près de huit ans étaient restés cachés et n'avaient jamais été constatés.

En général ces systèmes requièrent deux ou trois ergots sur une des deux parties du raccord et les encoches correspondantes, en L dans les systèmes à baïonnette par exemple, sur l'autre partie du raccord.

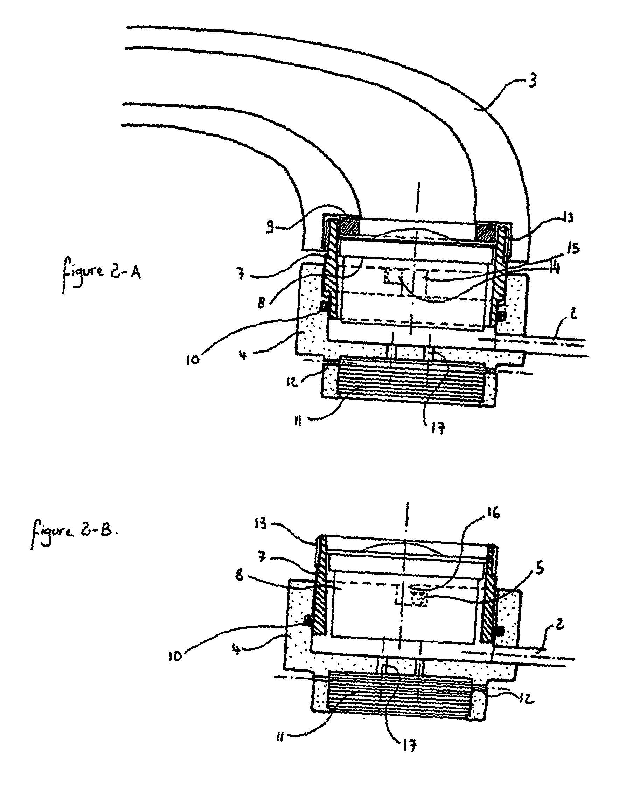

Ici on se rend compte aux essais, de façon surprenante, qu'un unique ergot (5) d'à peine un millimètre de diamètre et d'un millimètre de long, perpendiculaire à la coque de l'aérateur (7), suffit à assurer le maintien du branchement du raccord aval à la coque de l'aérateur d'eau, en dépit de la pression d'eau dans le dispositif, une fois l'ergot (5) engagé dans l'encoche (16) du raccord aval (figure 2-B).

Un ou plusieurs joints toriques (10) circulaires aménagés autour d'une des deux parties du raccord - le raccord aval idéalement pour plus de discrétion - assurent l'étanchéité du raccordement.

Un ou plusieurs joint toriques pourront préférentiellement ceindre la coque de l'aérateur au-dessus de la limite inférieure de la base de l'aérateur (soit, en position d'aérateur vissé, au-dessus de la limite, ou arrête, entre la surface interne et la surface externe de la surface de l'aérateur). Du tartre est en effet susceptible de s'accumuler également sur cette limite (ou arrête).

Pour plus de discrétion encore, le filetage ou le taraudage de la coque de l'aérateur pourra être réalisé de telle sorte qu'en position d'aérateur vissé, cet ergot (5) soit à l'arrière du robinet (3).

On peut également pratiquer la ou les encoches (15) sur le raccord amont et le ou les ergots correspondants (14) sur le raccord aval (figure 2-A).

Pour éviter que la coque de l'aérateur (7) ne se dévisse du bec du robinet (3) quand est effectué le branchement à baïonnette du raccord aval (4) à la coque de l'aérateur d'eau, le serrage pour de branchement à baïonnette du raccord aval sur la coque de l'aérateur se fait dans le sens qui contribue au vissage de la coque de l'aérateur au bec du robinet d'eau courante (3).

La combinaison de l'hydropulseur dentaire et de l'aérateur d'une part, et le système économique, étanche et discret du raccord à baïonnette d'autre part, une fois combinés, permettent de conserver au robinet une fonctionnalité et un aspect extérieur quasiment inchangés. Ces avantages déterminants pour l'utilisation d'un hyaroputseur branché au bec du robinet d'eau courante, dans l'environnement d'une salle de bain, n'avaient pu être rassemblés dans les systèmes jusqu'alors imaginés. Aussi important que soit le nettoyage des espaces inter-dentaire pour la santé bucco-dentaire, les systèmes d'hydroputseur dentaire reliés au réseau d'eau courante jusqu'alors et depuis si longtemps imaginés, ne se sont révélés suffisamment fonctionnels et discrets pour permettre leur acceptation dans l'environnement d'une salle de bain.

D'autre part, un troisième objectif de l'invention consiste à obtenir une température tiède du jet d'eau à la sortie de la buse. Les dents sont en effet généralement très sensibles à La température.

Or l'ouverture à la sortie de la buse (1) est très étroite. Le débit en eau est donc faible. On se rend alors compte d'une forte domination d'un des deux flux en eau, le flux d'eau froide ou le flux d'eau chaude, celui dont la pression est supérieure dans le robinet, même si la différence de pression entre les flux d'eau froide et d'eau chaude n'est que très légère. La pression des flux d'eau froide et d'eau chaude est différente dans la très grande majorité des installations sanitaires. Cette différence est parfois même très importante.

L'idée est donc d'aménager une ou plusieurs ouvertures (17) dans le raccord - dans la partie aval du raccord (4) notamment - pour évacuer une partie de l'eau dans le lavabo afin de réaliser un débit et une perte de charge suffisantes pour faciliter le mélange des deux flux d'eau et permettre l'obtention rapide et facile d'eau tiède. Le débit et la perte de charge rendent le mélange entre l'eau chaude et l'eau froide bien plus facile et rapide ce qui est important pour l'utilisateur d'un hydropulseur dentaire branché au bec d'un robinet d'eau courante.

En général, la pression dans les canalisations varie en France de 2.5 à 8 bars. Certains hydropulseurs dentaires électriques peuvent atteindre des pressions supérieures. Cependant, la force du jet à la sortie de la buse ne doit pas être susceptible de léser les tissus gingivaux. Le débit et la perte de charge réalisées par les ouvertures (17) dans le raccord permettent donc en plus de réduire la force du jet à la sortie de la buse.

Il peut ainsi être important de tarer à une valeur donnée la pression dans le raccord pour limiter la force du jet (6) à la sortie de la buse (1) à une force donnée. L'invention réalise également la combinaison d'un raccord à hydropulseur dentaire avec un clapet réglé de telle sorte que la force du jet à la sortie de la buse soit limitée à une valeur maximale.

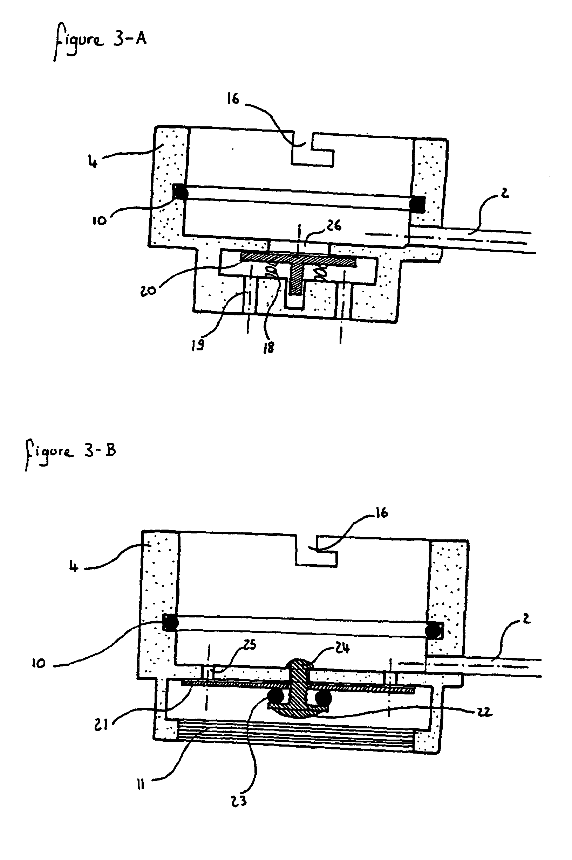

Ainsi, si l'on veut limiter la pression dans le tube flexible (2) à trois bars, on peut intégrer dans le raccord un clapet (20) fonctionnant avec un ressort (18) taré à trois bars. Le débit en excès est donc évacué dans le lavabo par les ouvertures (19) et (26) de sorte que la pression dans le tube soit de trois bars (figure 3-A).

On peut également réaliser cette limitation de pression, avec un plus faible encombrement encore, ce qui est important, en plaquant une membrane flexible (21) contre une ou plusieurs ouvertures (25) sur le raccord aval (4) (figure 3-B). Cette membrane flexible (21) se courbe et s'entrebâille à mesure que la pression dans le raccord augmente pour évacuer le débit en excès vers le lavabo par les ouvertures (25). Une vis (22) écrase un joint torique (23) contre la membrane flexible (21). Le tarage du système est notamment fonction de l'écrasement du joint torique (23) par la vis (22). Un rivet ou un écrou de serrage (24) pourront maintenir le serrage de la vis (22) dans le raccord aval (4). L'écrasement initial pour obtenir une valeur de tarage donnée sera déterminé par des essais.

Un brise-jet (11) sur le raccord aval pourra orienter l'eau en excès vers le lavabo. Des trous d'arrivée d'air (12) pourront faciliter l'aération de cette eau en excès.

Les pièces des mécanismes pourront être en toute matière, plastique et/ou métal notamment.

## Revendications

1. Combinaison d'un hydropulseur dentaire (1) branchable au bec d'un robinet d'eau courante et d'un aérateur d'eau (8), combinaison qui comprend un raccord amont (7) apte à être vissé à demeure au bec (3) du robinet et présentant une surface externe dépassant du bec (3), ce raccord amont (7) logeant l'aérateur (8), et un raccord aval (4) amovible pour le branchement de l'hydropulseur (1), le raccord aval (4) et le raccord amont (7) coopérant par au moins un ergot (14, 5) et au moins une encoche (15, 16) ainsi que par des joints d'étanchéité (10), **caractérisée en ce que** l'ergot (14, 5) ou l'encoche (15, 16) du raccord amont (7) est prévu sur sa surface externe et **en ce que** l'aérateur (8) est logé en position fixe à l'intérieur du raccord amont (7).

2. Combinaison selon la revendication 1, **caractérisée en ce que** l'ergot (14, 5) ou l'encoche (15, 16) est unique.

3. Combinaison selon l'une quelconque des revendications précédentes **caractérisée par** la présence d'au moins un joint torique (10), entourant, après branchement, la surface externe du raccord amont (7) au-dessus de la limite (le bord) inférieure de la surface du raccord amont (7) contenant l'aérateur (8), ce ou ces joints toriques étant solidaires du raccord aval (4) de l'hydropulseur et/ou du raccord amont de l'hydropulseur.

4. Combinaison selon l'une quelconque des revendications précédentes, **caractérisée par** des ouvertures de perte de charge (17) dans l'un des deux raccords amont (7) ou aval (4), qui évacuent une partie du débit hors de l'hydropulseur.

5. Combinaison selon l'une quelconque des revendications précédentes **caractérisée par** un clapet (20, 21) dans le raccord aval (4) pour limiter la pression de l'eau dans le raccord.

6. Combinaison selon la revendication 5, **caractérisée en ce que** le clapet est un clapet à membrane (21).

7. Combinaison selon la revendication 6, **caractérisée en ce que** le clapet comprend une membrane (21) plaquée contre une ou plusieurs ouvertures (25) par une vis (22).

8. Combinaison selon la revendication 5, **caractérisée en ce que** le clapet est un clapet (20) à ressort (18).

## Patentansprüche

1. Kombination eines Zahn-Hydropulsators (1) anschließbar am Wasserleitungshahn und eines Wasserlüfters (8), Kombination, die einen oberseitigen Stutzen (7) einschließt, der dauerhaft an den Wasserhahn (3) geschraubt werden kann und eine Außenfläche hat, die über den Hahn (3) hinausgeht, dieser oberseitige Stutzen (7) nimmt den Lüfter (8) auf, und ein unterseitiger, für das Anschließen des Hydropulsators (1) abnehmbarer Stutzen (4), der unterseitige Stutzen (4) und der oberseitige Stutzen (7) wirken dabei wenigstens durch einen Nocken (14, 5) und wenigstens eine Einkerbung (15, 16) zusammen sowie durch Dichtungsringe (10), **dadurch gekennzeichnet, dass** der Nocken (14, 5) oder die Einkerbung (15, 16) des oberseitigen Stutzens (7) auf seiner Außenfläche vorgesehen ist und dass der Lüfter (8) in fester Position innerhalb des oberseitigen Stutzens (7) befestigt ist.

2. Kombination nach Patentanspruch 1, **dadurch gekennzeichnet dass** der Nocken ( 14, 5) oder die Einkerbung (15, 16) einmalig ist.

3. Kombination nach irgendeinem der vorstehenden Patentansprüche **gekennzeichnet durch** das Vorhandensein wenigstens eines nach Verbindung einschließenden O-Rings (10), die Außenfläche des oberseitigen Stutzens (7) oberhalb der unteren Begrenzung (des Rands) des oberseitigen Stutzens (7) enthält dabei den Lüfter (8), dieser O-Ring oder diese O-Ringe sind dabei fest mit dem unterseitigen Stutzen (4) des Hydropulsators und/oder dem oberseitigen Stutzen des Hydropulsators verbunden.

4. Kombination nach irgendeinem der vorstehenden Patentansprüche **gekennzeichnet durch** Druckverminderungs-Öffnungen (17) in einem der beiden oberseitigen Stutzen (7) oder unterseitigen Stutzen (4), die einen Teil des Durchflusses aus dem Hydropulsators ableiten.

5. Kombination nach irgendeinem der vorstehenden Patentansprüche **gekennzeichnet durch** eine Klappe (20, 21) im unterseitigen Stutzen (4), um den Wasserdruck im Stutzen zu begrenzen.

6. Kombination nach Patentanspruch 5, **dadurch gekennzeichnet dass** die Klappe eine Membranklappe (21) ist.

7. Kombination nach Patentanspruch 6, **dadurch gekennzeichnet dass** die Klappe eine Membran (21) einschließt, die gegen eine oder mehrere Öffnungen (25) durch eine Schraube (22) plattiert wird.

8. Kombination nach Patentanspruch 5, **dadurch gekennzeichnet dass** die Klappe (20) eine Federklappe (18) ist.

## Claims

1. Combination of a dental water pick (1), connectable to the spout of a running water faucet, and a water aerator (8), a combination that is comprised of an upstream connector (7) that can be permanently screwed onto the spout (3) of the faucet and that has an external surface overrunning the spout (3), said upstream connector (7) accommodating the aerator (8), and a removable downstream connector (4) for connecting the water pick (1), the downstream connector (4) and the upstream connector (7) cooperating by means of at least one catch (14,5) and at least one notch (15,16) as well as by means of seals (10), **characterized in that** the catch (14,5) or the notch (15,16) of the upstream connector (7) is provided on its external surface and that the aerator (8) is located in a fixed position inside upstream connector (7).

2. Combination according to Claim 1, **characterized in that** the catch (14,5) or the notch (15,16) is singular.

3. Combination according to any one of the preceding claims, **characterized by** the presence of at least one O-ring (10) surrounding, after connection, the external surface of the upstream connector (7) above the lower limit (the edge) of the surface of the upstream connector (7) containing the aerator (8), said O-ring(s) being fixed to the downstream connector (4) of the water pick and/or the upstream connector of the water pick.

4. Combination according to any one of the preceding claims, **characterized by** charge loss openings (17) in either the upstream coupling (7) or downstream coupling (4), which evacuate a portion of the flow outside of the water pick.

5. Combination according to any one of the preceding claims, **characterized by** a valve (20,21) in the downstream connector (4) to limit the water pressure in the connector.

6. Combination according to Claim 5, **characterized in that** the valve is a membrane valve (21).

7. Combination according to Claim 6, **characterized in that** the valve comprises a membrane (21) placed against one or more openings (25) via a screw (22).

8. Combination according to Claim 5, **characterized in that** the valve is a valve (20) with a spring (18).
